(19) Europäisches Patentamt

European Patent Office

Office européen des brevets

(11) **EP 0 902 252 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(51) Int Cl.⁷: **G01B 21/08**, G01N 25/00, G01K 3/10

(21) Anmeldenummer: **97115582.5**

(22) Anmeldetag: **09.09.1997**

(54) **Verfahren und Vorrichtung zur Erzeugung eines Signals in Abhängigkeit eines Flüssigkeitsfilmes auf einer Fläche**

Method and apparatus for producing a signal in dependence of a liquid film on a surface

Méthode et appareil pour la production d'un signal dépendant d'une couche de liquide sur une surface

(84) Benannte Vertragsstaaten:
**AT BE CH DE DK ES FI FR GB GR IE IT LI LU MC NL PT SE**

(43) Veröffentlichungstag der Anmeldung:
**17.03.1999 Patentblatt 1999/11**

(73) Patentinhaber: **Boschung Mecatronic AG**
**1763 Granges-Paccot (CH)**

(72) Erfinder:
 • **Boschung, Marcel, Jr.**
  **1740 Neyruz (CH)**
 • **Bornand, Etienne**
  **1742 Autigny (CH)**

(74) Vertreter: **Blum, Rudolf Emil Ernst**
**c/o E. Blum & Co**
**Patentanwälte**
**Vorderberg 11**
**8044 Zürich (CH)**

(56) Entgegenhaltungen:
 EP-A- 0 045 106   DE-A- 3 118 997
 GB-A- 1 434 605   US-A- 5 418 522

 • **PATENT ABSTRACTS OF JAPAN vol. 97, no. 8, 29.August 1997 & JP 09 089546 A (MITSUBISHI MATERIALS CORP), 4.April 1997,**

**Beschreibung**

Die Erfindung betrifft ein Verfahren zur Erzeugung eines Signals in Abhängigkeit von einem Flüssigkeitsfilm auf einer Fläche, insbesondere einer Verkehrsfläche. Ferner betrifft die Erfindung eine Vorrichtung zur Erzeugung eines Signals in Abhängigkeit von einem Flüssigkeitsfilm auf einer Fläche, insbesondere einer Verkehrsfläche sowie eine Anwendung des Verfahrens bzw. eine Verwendung der Vorrichtung in einer Anordnung zur Ermittlung des Gefrierpunktes der Flüssigkeit.

Es ist wünschenswert, ein Signal zu erzeugen, welches Information über die Dicke eines Flüssigkeitsfilmes auf Verkehrsflächen gibt, worunter z.B. Strassen und Roll- und Start/Landepisten für Flugzeuge verstanden werden. Es kann damit eine Information über die Gefahr des sogenannten Aquaplanings (Aufschwimmen der Räder eines Fahrzeuges auf dem von den Rädern nicht mehr verdrängbaren Anteil des Wasserfilmes) gewonnen bzw. eine Warnung an die Benützer der Verkehrsfläche abgegeben werden. Bekannterweise steigt die Gefahr des Aquaplanings mit zunehmender Dicke des Wasserfilmes. Aus EP-A-0 432 360 ist es bekannt, die Wasserfilmdicke durch die Reflektion von Mikrowellen möglichst genau zu messen. Dieses Verfahren ist indes aufwendig. Aus US-A-4 897 597 ist es bekannt, die Wasserfilmdicke durch eine Konduktivitätsmessung zu ermitteln, was indes nicht immer zu befriedigenden Ergebnissen führt.

Es stellt sich daher die Aufgabe ein möglichst einfaches und kostengünstiges Verfahren zu schaffen, mit dem ein Signal erzeugt werden kann, das eine Abhängigkeit vom Flüssigkeitsfilm aufweist. Es stellt sich weiter die Aufgabe eine entsprechende Vorrichtung zu schaffen.

Diese Aufgabe wird bei einem Verfahren der eingangs genannten Art durch die kennzeichnenden Merkmale des Anspruchs 1 gelöst.

Es hat sich gezeigt, dass durch Erwärmung bzw. Abkühlung eines Teils des Flüssigkeitsfilmes und Messung der Temperaturzunahme bzw. Temperaturabnahme mit genügender Genauigkeit zumindest darauf geschlossen werden kann, in welchem Dickenbereich die Dicke des Flüssigkeitsfilms liegt. In der Regel genügt eine solche Zuordnung der Flüssigkeitsfilmdicke zu einem Dickenbereich bzw. einer Klasse für die Zwecke einer Aquaplaningwarnung. Das Verfahren erlaubt indes auch die Ermittlung der absoluten Dicke mit guter Genauigkeit, wenn bei der Auswertung des Temperaturverlaufs ein grösserer Auswertungsaufwand geleistet wird.

Die Aufgabe wird bei einer Vorrichtung der eingangs genannten Art durch die kennzeichnenden Merkmale des Anspruchs 6 gelöst.

Bevorzugt wird eine Vorrichtung mit einem Peltier-Element zur Erwärmung des Flüssigkeitsfilmes. Dieses erlaubt durch umgekehrten Betrieb des Peltier-Elementes auch eine Abkühlung des Flüssigkeitsfilmes. Die Vorrichtung kann somit zusätzlich auch zur Bestimmung des Gefrierpunktes der Flüssigkeit gemäss dem Verfahren nach EP-A-0 045 106, nach DE-A-31 18 997 oder nach EP-A-0 362 173 verwendet werden.

Im folgenden werden Ausführungsbeispiele des Verfahrens bzw. der Vorrichtung anhand der Zeichnungen näher erläutert. Dabei zeigt

Figur 1 schematisch den elektrischen Aufbau einer Vorrichtung zur Durchführung des Verfahrens;
Figur 2 schematisch den konstruktiven Aufbau einer Vorrichtung zur Durchführung des Verfahrens;
Figur 3 approximativ die Abhängigkeit des erwärmten Flüssigkeitsvolumens von der Flüssigkeitsfilmdikke bei der Vorrichtung gemäss Figur 2;
Figur 4 schematisch den Anstieg der Temperatur der erwärmten Flüssigkeit;
Figur 5 schematisch den Anstieg der Temperatur für drei verschiedene Flüssigkeitsfilmdicken; und
Figur 6 schematisch die Abnahme der Temperatur für drei verschiedene Flüssigkeitsfilmdicken.

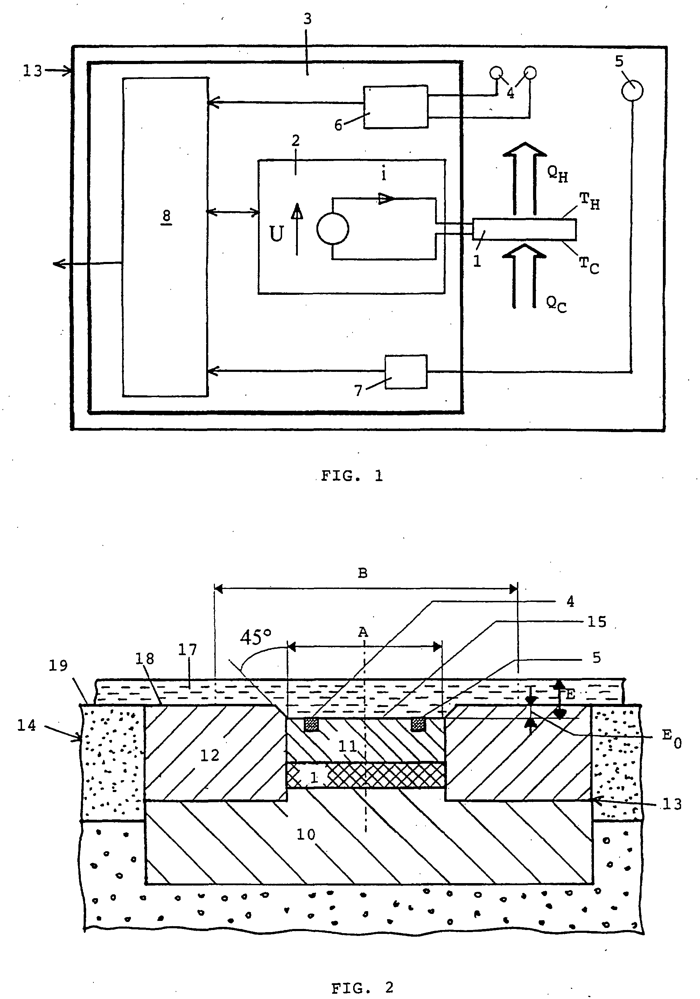

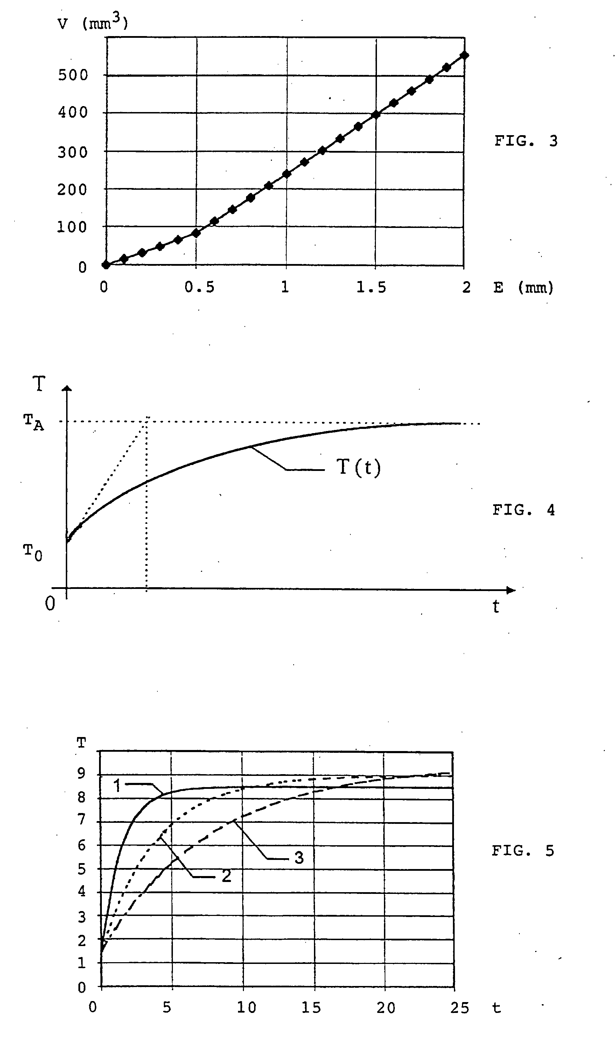

Die Figuren 1 und 2 zeigen in vereinfachter, schematischer Darstellung die elektrische bzw. konstruktive Ausgestaltung einer Vorrichtung gemäss der Erfindung. Dabei wird zur Erwärmung des Flüssigkeitsfilmes ein Peltier-Element verwendet. Dies ist nur als Beispiel zu verstehen, da die Erwärmung des Flüssigkeitsfilmes grundsätzlich mit einer beliebigen Wärmequelle erfolgen kann, z.B. mit einer elektrischen Widerstandsheizung. Wie bereits erwähnt, kann anstelle der Erwärmung auch eine Abkühlung erfolgen, doch wird nachfolgend als Beispiel jeweils von der Erwärmung ausgegangen. In Figur 1 ist das Peltier-Element 1 schematisch als Block dargestellt. Es wird elektrisch von einer Speiseschaltung 2 gespiesen, welche sich bei diesem Beispiel innerhalb einer Steuer-und Auswertschaltung 3 befindet. Die Speiseschaltung 2 umfasst eine elektrische Quelle, welche z.B. eine Konstantstromquelle mit dem konstanten Strom i sein kann, oder eine Quelle mit. einem nichtkonstanten, aber bekannten Stromverlauf. Die Wärme $Q_H$, die auf der warmen Seite des Peltier-Elementes erzeugt wird, ergibt sich nach der Formel $Q_H = Q_C + U \cdot i$, wobei $Q_C$ die der kalten Seite des Peltier-Elements entzogene Wärme bedeutet und U und i die Spannung bzw. den Strom am Peltier-Element angeben. $T_C$ und $T_H$ sind die Temperaturen der kalten bzw. warmen Seite des Peltier-Elementes. Das Peltier-Element kann indes bei umgekehrter Stromrichtung auch zur Abkühlung verwendet werden, da dann die kalte und die warme Seite vertauscht sind.

Figur 2 zeigt das Peltier-Element 1 eingespannt zwischen einem wärmeleitenden Körper 10, z.B. aus Kupfer und einem zweiten wärmeleitenden Körper 11, z.B. aus Aluminium. Zusammen mit einem Gehäuseblock 12 aus schlecht wärmeleitendem Material bilden die Elemente 1, 10 und 11 die Vorrichtung 13, welche in der Form einer Bodensonde unterhalb derjenigen Fläche eingebaut werden kann, auf der der Wasserfilm zu liegen kommt. Im gezeigten Beispiel ist dazu eine Strasse 14 mit verschiedenen Schichten schematisch angedeutet, in welche die Sonde 13 eingebaut ist, so dass die Oberfläche 18 der Sonde 13 bündig mit der Oberfläche 19 der Strasse 14 zu liegen kommt. Der Körper 10 der Sonde ist dabei im Erdreich bzw. im Strassenkoffer eingebettet, um diesem Wärme zu entziehen, die zur Aufheizung des Wasserfilms 17 verwendet wird. Der oberhalb des Peltier-Elementes 1 angeordnete wärmeleitende Körper 11 bildet mit seiner Oberfläche 15 die Heizfläche für den Wasserfilm. In der Sonde 13 können weiter Elektroden 4 vorgesehen sein, mittels welchen durch eine Leitwertmessung feststellbar ist, ob überhaupt ein Wasserfilm vorhanden ist oder nicht. Dazu sind die Elektroden 4 mit einer entsprechenden Messeinrichtung 6 verbunden, die ihrerseits mit einem Steuer- und Auswertelement 8, insbesondere einem Mikroprozessor, der Steuer- und Auswerteinrichtung 3 verbunden ist. Solche Elektroden können auch an anderer Stelle der Strasse vorgesehen sein anstatt in der Sonde 13. Ferner ist in der Sonde ebenfalls in Kontakt mit dem Wasserfilm 17 ein Temperaturmesswiderstand 5 angeordnet, mittels welchem die Temperatur des Flüssigkeitsfilmes messbar ist. Dieser Messwiderstand, in der Regel ein bekanntes Pt100-Element, oder auch ein Thermoelement, ist über eine entsprechende Messschaltung 7 ebenfalls mit dem Mikroprozessor 8 verbunden. Die Temperatur kann auch mittels des Peltierelementes gemessen werden, wie aus EP-A-0 362 173 bekannt.

Der gezeigte Aufbau der Sonde 13 und deren Einbau sind natürlich nur als Beispiel zu verstehen. Die Sonde kann, wie erwähnt, auch eine andere Art von Heizelement umfassen und sie kann auf andere Art neben oder auch oberhalb der Fläche angeordnet sein, auf der der Wasserfilm bestimmt werden soll, wobei dann darauf zu achten ist, dass die Oberfläche der Sonde so angeordnet ist, dass sich auf dieser in der Regel ein gleichartiger Wasserfilm einstellt, wie auf der zu beobachtenden Fläche. Auch die Auswerteinrichtung und Steuereinrichtung kann natürlich anders aufgebaut sein, z.B. aus getrennten Elementen bestehend, als in dem Beispiel gezeigt. Wie gesagt, brauchen auch die Elektroden 4 nicht in der Sonde angeordnet zu sein.

Im gezeigten Beispiel weist die Oberfläche 18 der Sonde einen vertieften Bereich auf, der von der Oberfläche 15 des Körpers 11 gebildet wird und im gezeigten Beispiel einen kreisrunden Bereich mit dem Durchmesser A bildet. Der Uebergang dieses Bereiches 15 zur nicht abgesenkten Oberfläche 18 der Sonde 13 ist im gezeigten Beispiel in einem Winkel von 45° abgeschrägt. Bei der Erwärmung des Wasserfilmes 17 durch die Heizungsanordnung kann in einer groben Näherung davon ausgegangen werden, dass eine Erwärmung des Wasserfilms in einem kreisförmigen Bereich mit dem Durchmesser B erfolgt. Der vertiefte Bereich der Oberfläche der Sonde 13 kann z.B. eine Tiefe $E_0$ von 0,5 mm aufweisen. Der Durchmesser A kann 14 mm betragen und der Durchmesser B 20 mm. Die Vertiefung ergibt eine nichtlineare Abhängigkeit des Wasserfilmvolumens V von der Dicke des Wasserfilmes E, wie dies in Figur 3 schematisch dargestellt ist. Die Vertiefung in der Sonde wird bevorzugt, um eine definierte Wassermenge auch bei sehr geringer Wasserfilmdicke E zur Verfügung zu haben. Andernfalls besteht die Gefahr, dass bei sehr geringer Wasserfilmdicke eine Verdunstung des Wasserfilmes bei dessen Erwärmung auftritt, was eine sinnvolle Messung verunmöglichen kann.

Zur Erzeugung eines Signals, welches vom Wasserfilm abhängig ist und dessen Dicke angibt, wird wie folgt vorgegangen. Vorzugsweise wird zunächst durch die Elektroden 4, sofern vorgesehen, mittels einer Widerstandsmessung festgestellt, ob sich überhaupt Wasser auf der Messonde 13 befindet. Ein sehr hoher bzw. unendlicher Widerstandswert bedeutet dabei, dass die Oberfläche der Sonde trocken ist. In diesem Fall wird keine Heizung durch das Peltier-Element eingeleitet und das Ausgangssignal der Sonde 13 bzw. deren Steuer- und Auswerteeinheit gibt an, dass kein Wasserfilm vorhanden ist. Wenn andererseits die Widerstandsmessung einen endlichen Wert ergibt, der das Vorhandensein von Flüssigkeit anzeigt, wird die Heizungsanordnung 1, 10, 11 aktiviert. Die dem Wasser zuzuführende Energie ergibt sich aus der spezifischen Wärme von Wasser, welche $4{,}185 \cdot 10^3$ J kg$^{-1}$ K$^{-1}$ beträgt. Wobei in diesem Fall davon ausgegangen wird, dass bei Heizungsbeginn das Wasser in flüssiger Form vorliegt. Wenn dies nicht der Fall ist, so muss die spezifische Wärme von Eis und die Schmelzwärme in Betracht gezogen werden. Für ein bekanntes Volumen bzw. die daraus gegebene Dicke des Wasserfilmes kann in erster Näherung von einem exponentiellen Temperaturverlauf der Temperatur T in Funktion der Zeit ausgegangen werden, welcher durch die Gleichung

$$T(t) = T_A - (T_A - T_0) \cdot e^{-\frac{t}{\tau}} \qquad (2)$$

ausgedrückt werden kann, wobei $T_0$ die Anfangstemperatur ist, TA die asymptotische Temperatur und $\tau$ die Zeitkonstante der Heizung darstellt. Figur 4 zeigt schematisch den entsprechenden Temperaturverlauf. Gemäss einem Aspekt der vorliegenden Erfindung wird die Wasserfilmdicke nicht in genauer quantitativer Form angegeben, sondern qualitativ durch Angabe eines Wasserfilmdickenbereiches, in dem sich die tatsächliche Wasserfilmdicke befindet. Aus diesem Grund ist es nicht notwendig die genaue Berechnung des dynamischen Verhaltens der Erwärmung des Wasserfilmes durchzuführen. Dies könnte indes vorgenommen werden, wenn die Wasserfilmdicke genau angegeben werden soll. Zu dieser Berechnung ist es notwendig, die Wärmeleitfähigkeit des Wasserfilmes (Temperaturgradient), den Wärmeaustausch zwischen Luft und Wasser durch Konvektion, Abstrahlung und Verdampfung des Wassers zu kennen, die Wärmeverluste in der Sonde, das Verhalten des Peltier-Elementes und des Aluminiumteiles 11, wobei ferner die Unterschiede im thermischen Verhalten zwischen reinem Wasser und Salzlösung usw. berücksichtigt werden müssen.

Es wird in der Regel indes genügend sein, die Wasserfilmdicke durch das Signal der Sonde so anzugeben, dass eine Einteilung der Wasserfilmdicke in verschiedene Klassen erfolgt. Dies ist z.B. gemäss der folgenden Tabelle möglich.

| Klasse | Fahrbahnzustand | E [mm] |
|--------|-----------------|--------|
| 1 | Trocken | 0 |
| 2 | Feucht | 0 bis 0,1 |
| 3 | Nass 1 | 0,1 bis 0,5 |
| 4 | Nass 2 | 0,5 bis 1 |
| 5 | Nass 3 | > 1 |

Dabei werden 5 Klassen für die Wasserfilmdikke E vorgesehen, wobei in der Klasse 1 Trockenheit vorliegt, in der Klasse 2 die Verkehrsfläche lediglich feucht ist und in den Klassen 3-5 verschiedene Bereiche einer nassen Fahrbahn vorliegen. Eine solche Einteilung genügt in der Regel für eine sinnvolle Aquaplaning-Warnung.

Figur 4 zeigt die Zunahme der Wasserfilmtemperatur, wobei sich die Zunahme durch die Formel 3 ausdrücken lässt.

$$\frac{\mathrm{d}T}{\mathrm{d}t} = \dot{T} = \frac{T_A - T_0}{\tau} \cdot e^{-\frac{t}{\tau}} . \tag{3}$$

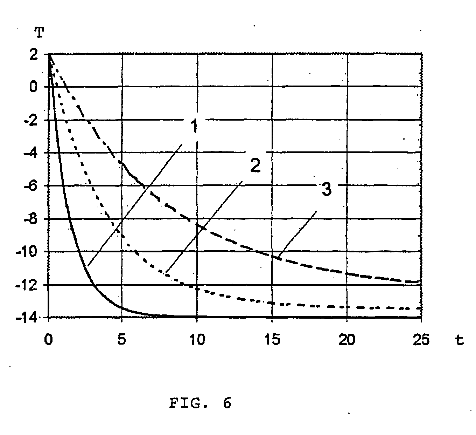

Die Zunahme nimmt progressiv ab, um dann Null zu werden wenn die Temperatur den asymptotischen Wert TA erreicht. In diesem Augenblick ist das System im dynamischen Gleichgewicht und die abgegebene Leistung ist gleich der von der Heizungsanordnung zugeführten Leistung. Der Verlauf der Temperaturzunahme ist nun charakteristisch für das Volumen bzw. für die Wasserfilmdicke. Figur 5 zeigt drei Beispiele für verschiedene Wasserfilmdicken, wobei der Kurvenverlauf 1 eine geringe Wasserfilmdicke, der Kurvenverlauf 2 eine mittlere Wasserfilmdicke und der Kurvenverlauf 3 eine grosse Wasserfilmdicke darstellt. Die Skalierung der Figur 5 ist dabei für die Zeit und die Temperatur in willkürlichen Einheiten gewählt und nicht in Sekunden und °C. Aus dem Kurvenverlauf kann nun durch die Auswerteinrichtung abgeleitet werden, in welche Klasse des Wasserfilmdickenbereiches der tatsächliche Wasserfilm eingereiht werden muss, der den jeweiligen Kurvenverlauf bei der Erwärmung hervorgerufen hat. So wäre, abhängig natürlich von der konkreten Skalierung der Figur 5, welche nicht angegeben ist, derjenige Wasserfilm, der den Kurvenverlauf 1 hervorgerufen hat, in die Klasse 2 oder 3 einzuordnen, derjenige Wasserfilm, der den Kurvenverlauf 2 hervorgerufen hat, in die Klasse 3 oder 4, und derjenige Wasserfilm, der den Kurvenverlauf 3 hervorgerufen hat, in die Klasse 4 oder 5. Figur 6 zeigt entsprechende Kurvenverläufe beim Abkühlen des Wasserfilmes.

Die Temperaturzunahmekurven liegen in der Auswerteinrichtung 3 natürlich nicht in graphischer Form vor, sondern sind als eine Abfolge von gespeicherten Temperaturmesswerten des Temperatursensors 5 verfügbar, welche in einem Speicher des Mikroprozessors 8 abgelegt sind. Der Kurvenverlauf kann natürlich durch eine mehr oder weniger grosse Anzahl von Temperaturmesswerten dargestellt werden. Vorzugsweise wird der erste Temperaturmesswert $T_0$ vor oder gerade bei Beginn der Heizung gebildet und gibt die anfängliche Temperatur des Wasserfilmes an. Nachfolgend können in verschiedenen Zeitabständen Temperaturmesswerte gewonnen werden, wobei natürlich der Kurvenverlauf desto genauer festgestellt werden kann, desto mehr Messwerte in der Zeit zwischen $T_0$ und dem Erreichen der asymptotischen Temperatur $T_A$ gespeichert werden. Zur Auswertung der gespeicherten Temperaturmesswerte können durch die Auswerteinrichtung 3 bzw. durch den Mikroprozessor verschiedene an sich bekannte Verfahren verwendet werden. Es kann erstens eine Approximation der Messwerte durch die Funktion (2) erfolgen und dadurch auf die Werte $T_A$ und $\tau$ geschlossen werden, welche ihrerseits eine Funktion der Dicke E sind (bei gegebenem Volumen des zu erwärmenden Wassers, welches durch den angenommenen Radius B des erwärmten Wasserbereiches gegeben ist). Alternativ zur Approximationsmethode kann die Zunahme $\Delta T$ der Temperatur während einer festen Zeit t* nach Beginn der Heizung gemessen werden. $\Delta T^*$ lässt sich wie folgt ausdrücken

$$\Delta T^* = T(t^*) - T_0 = (T_A - T_0) \cdot (1 - e^{-\frac{t^*}{\tau}})$$ (4)

und daraus lässt sich wiederum über $T_A$ und $\tau$ auf die Wasserfilmdicke schliessen.

Für eine präzise Wasserfilmdickenmessung können die Dickenwerte $\varepsilon$ in beliebiger Feinunterteilung in einer Tabelle gespeichert sein. Durch die Auswertung des Kurvenverlaufs wird dann auf den zutreffenden Tabellenwert geschlossen.

Als weitere Variante kann ab dem Heizungsbeginn bei der Zeit t = 0 die Zeit $t_x$ gemessen werden, welche bis zu einer vorbestimmten Temperaturerhöhung $\Delta T_x$ benötigt wird. Aus der Gleichung 2 und den nachfolgenden Gleichungen 5 und 6 kann dann wiederum die Wasserfilmdikke E über die Werte $T_A$ und $\tau$ ermittelt werden.

$$t(T) = \tau \cdot \ln\left(\frac{T_A - T_0}{T_A - T}\right) \cdot$$ (5)

$$t_x = t(T_0 + \Delta T_x) = \tau \cdot \ln\left(\frac{T_A - T_0}{T_A - T_0 - \Delta T_x}\right) \cdot$$ (6)

Durch die genannten Auswertmethoden kann eine Einteilung der Wasserfilmdicke in die gewünschten Klassen erfolgen und von der Auswerteinrichtung kann ein entsprechendes Signal abgegeben werden.

Wie bereits erwähnt, ist aus EP-A-0 045 106 und EP-A-0 361 173 ein Verfahren zur Bestimmung des Gefrierpunktes einer Flüssigkeit bekannt. Solche Verfahren lassen sich mit der beschriebenen Sonde ebenfalls durchführen, so dass mit einer einzigen Sonde in der Fahrbahn sowohl eine Eisglättewarnung als auch eine Aquaplaningwarnung erzeugbar ist.

Wenn sich Eis auf der Sonde befindet, so kann dieses zunächst geschmolzen werden, um die Wasserfilmdikke zu ermitteln. Es kann dann wieder gekühlt werden, um den Gefrierpunkt zu ermitteln. Es ist indes auch möglich, dass beim Auftauen der Schmelzpunkt ermittelt wird, wodurch auch die Gefrierpunkttemperatur bekannt ist. Es können indes auch separate Sonden zur Ermittlung der Wasserfilmdicke und des Gefrierpunktes vorgesehen sein. In diesem Fall wird die Vorrichtung zur Wasserfilmdickenermittlung vorzugsweise in einer Anordnung zur Gefrierpunktermittlung verwendet. Die Kenntnis der Wasserfilmdicke ist bei der Gefrierpunktermittlung nützlich, da daraus - bei bekannter Menge ausgebrachten Taumittels pro Flächeneinheit - auf die Taumittelkonzentration in der Flüssigkeit geschlossen werden kann.

**Patentansprüche**

1. Verfahren zur Erzeugung eines Signals in Abhängigkeit von einem Flüssigkeitsfilm (17) auf einer Fläche (18, 19), insbesondere einer Verkehrsfläche, wobei mit einer Heizungsanordnung bzw. einer Kühlanordnung (1, 10, 11) ein Teil der Flüssigkeit des Flüssigkeitsfilmes (17) erwärmt bzw. abgekühlt wird, mit einer Temperaturmessanordnung (5, 7, 8) die Zunahme bzw. Abnahme der Temperatur des erwärmten bzw. gekühlten Teils der Flüssigkeit ermittelt wird, und mit einer Steuer -und Auswerteinrichting der Temperaturzunahme bzw. Abnahme ein Wert oder Wertebereich für die Dicke des Flüssigkeitsfilmes zugeordnet und als Signal abgegeben wird.

2. Verfahren nach Anspruch 1, wobei bei der Heizungsanordnung bzw. Kühlanordnung ein gegenüber der Fläche (18, 19) abgesenkter Bereich vorgesehen ist, in welchem die Erwärmung der Flüssigkeit erfolgt.

3. Verfahren nach Anspruch 1 oder 2, wobei die Heizleistung bzw. Kühlleistung bei der Erwärmung bzw. Abkühlung konstant gehalten wird.

4. Verfahren nach einem der Ansprüche 1 bis 3, wobei jeweils vor oder zu Beginn der Erwärmung bzw. Abkühlung die Anfangstemperatur $T_0$ des Flüssigkeitsfilms bestimmt wird.

5. Verfahren nach einem der Ansprüche 1 bis 4, wobei vor Beginn der Erwärmung bzw. Abkühlung eine Prüfung auf das Vorhandensein von Flüssigkeit vorgenommen wird, und dass die Heizungsanordnung bzw. Kühlanordnung nur dann aktiviert wird, wenn Flüssigkeit festgestellt worden ist.

**6.** Vorrichtung zur Erzeugung eines Signals in Abhängigkeit von einem Flüssigkeitsfilm (17) auf einer Fläche (18, 19), insbesondere einer Verkehrsfläche, wobei eine Heizungsanordnung bzw. Kühlanordnung (1, 2, 10, 11), durch welche ein Teil des Flüssigkeitsfilmes (17) erwärmbar bzw. abkühlbar ist, eine Temperaturmessanordnung (5, 7, 8) zur Ermittlung der Temperatur des von der Heizungsanordnung bzw. Kühlanordnung erwärmbaren bzw. abkühlbaren Flüssigkeitsfilmes (17) und eine Steuer- und Auswerteinrichtung (3) vorgesehen ist, durch welche die Heizungsanordnung bzw. Kühlanordnung und die Temperaturmessanordnung steuerbar sind und die Signale der Temperaturmessanordnung auswertbar sind, derart, dass der gemessenen Temperaturzunahme bzw. -abnahme eine Dicke oder ein Dickenbereich des Flüssigkeitsfilmes zugeordnet und als Signal ausgegeben wird.

**7.** Vorrichtung nach Anspruch 6, wobei diese Vorrichtung ein Mittel (4, 6), insbesondere eine Elektrodenanordnung, zur Bestimmung des Vorhandenseins von Flüssigkeit im Bereich der Heizanordnung bzw. der Kühlanordnung umfasst.

**8.** Vorrichtung nach einem der Ansprüche 6 oder 7, wobei die Heizanordnung bzw. Kühlanordnung mindestens ein Peltier-Element (1) umfasst, welches mit einer konstanten Leistung betrieben wird.

**9.** Vorrichtung nach einem der Ansprüche 6 bis 8, wobei diese eine Oberfläche (18) aufweist, welche mit der Fläche (19) bündig ausrichtbar ist, derart, dass der Flüssigkeitsfilm (17) die Fläche (19) und die Oberfläche (18) der Vorrichtung gleichmässig bedeckt, und dass im Bereich der Heizungsanordnung bzw. Kühlungsanordnung eine Vertiefung in der Oberfläche (18) vorgesehen ist.

**10.** Anwendung des Verfahrens nach Anspruch 1 bzw. Verwendung einer Vorrichtung nach Anspruch 6 in einer Anordnung zur Erzeugung eines den Gefrierpunkt der Flüssigkeit auf der Fläche angebenden Signals.

**Claims**

**1.** Process for generating a signal dependent upon a liquid film (17) on a surface (18,19), particularly a traffic surface, where a portion of the liquid of the liquid film (17) is heated or cooled by a heating or a cooling arrangement (1,10,11), the increase or decrease in the temperature of the heated or cooled portion of the liquid is ascertained by a temperature measuring arrangement (5,7,8), and a value or value range for the thickness of the liquid film is associated to the temperature increase or decrease by a control and evaluation device(8), and released as a signal.

**2.** Process according to claim 1, where an area is provided in the heating arrangement or cooling arrangement which is indented relative to the surface (18,19) and in which area the liquid is heated.

**3.** Process according to claim 1 or 2, where the heating or cooling power is kept constant during heating or cooling.

**4.** Process according to one of claims 1 to 3, where the initial temperature $T_0$ of the liquid film is determined before or at the beginning of heating or cooling.

**5.** Process according to one of claims 1 to 4, where a test on the presence of liquid is performed before the beginning of heating or cooling, and the heating arrangement or cooling arrangement activated only when liquid is present.

**6.** Device for generating a signal dependent upon a liquid film (17) on a surface (18,19), particularly a traffic surface, comprising a heating arrangement or a cooling arrangement (1,2,10,11) by means of which a portion of the liquid film (17) can be heated or cooled, a temperature measuring arrangement (5,7,8) for determining the temperature of the liquid film (17) that can be heated or cooled by the heating or cooling arrangement, and a control and evaluation device (3) by means of which the heating arrangement or the cooling arrangement and the temperature measuring arrangement can be controlled and the signals of the temperature measuring arrangement can be evaluated in such a way that a thickness, or thickness range, of the liquid film is assigned to the measured temperature increase or decrease and emitted as a signal.

**7.** Device according to claim 6, which includes means (4,6), particularly an electrode arrangement, for identifying the presence of liquid in the area of the heating or cooling arrangement.

8. Device according to one of claims 6 or 8, where the heating or cooling arrangement includes at least one Peltier element (1) which is operated at a constant power.

9. Device according to one of claims 6 to 8, where said device exhibits an outer surface (18) that can be aligned so as to be flush with the surface (19), such that the liquid film (17) uniformly covers the area (19) and the outer surface (18) of the device, and where an indentation is provided in the outer surface (18) in the area of the heating or cooling arrangement.

10. Use of the process according to claim 1 or use of a device according to claim 6 in a plant for generating a signal that indicates the freezing point of the liquid on the surface.

**Revendications**

1. Procédé pour générer un signal en fonction d'un film de liquide (17) sur une surface (18,19), en particulier une surface supportant un trafic, une partie du liquide formant le film (17) étant chauffée, respectivement refroidie par un dispositif de chauffage, respectivement de refroidissement (1,10,11), avec un appareillage de mesure de température (5,7,8) mesurant l'augmentation respectivement la diminution de température de la partie chauffée, respectivement refroidie, du liquide, une valeur ou une plage de valeurs pour l'épaisseur du film de liquide étant associée par des moyens de commande et d'exploitation à l'augmentation, respectivement à la diminution de température, et un signal correspondant émis par ces moyens.

2. Procédé selon la revendication 1 où le dispositif de chauffage, respectivement de refroidissement (1,10,11), comporte une région plus basse que la surface (18,19) et dans laquelle a lieu le chauffage du liquide.

3. Procédé selon une des revendications 1 ou 2, dans lequel la puissance de chauffage respectivement de refroidissement est maintenue constante pendant le chauffage respectivement le refroidissent.

4. Procédé selon une des revendications 1 à 3, dans lequel la température initiale $T_0$ du film de liquide est déterminée avant le ou au début du chauffage, respectivement refroidissement.

5. Procédé selon une des revendications 1 à 4, dans lequel le chauffage respectivement le refroidissement est précédé d'une détermination de la présence de liquide, le dispositif de chauffage respectivement de refroidissement n'étant activé qu'en la présence de liquide.

6. Dispositif pour générer un signal en fonction d'un film de liquide (17) sur une surface (18,19), en particulier une surface supportant un trafic, comportant un dispositif de chauffage, respectivement de refroidissement (1,2,10,11), capable de chauffer, respectivement de refroidir une partie du film de liquide (17), un appareillage de mesure de température (5,7,8) pour déterminer la température de la partie du film de liquide (17) pouvant être chauffée, respectivement refroidie par le dispositif de chauffage, respectivement de refroidissement, et des moyens de commande et d'exploitation (3) pouvant commander le dispositif de chauffage, respectivement de refroidissement ainsi que l'appareillage de mesure de température et capable d'exploiter les signaux de celui-ci de manière à associer à l'augmentation, respectivement à la diminution de température une épaisseur ou une plage d'épaisseur du film de liquide et à émettre un signal correspondant.

7. Dispositif selon la revendication 6 comportant un moyen (4,6), en particulier un agencement d'électrodes, pour déterminer la présence de liquide à l'endroit du dispositif de chauffage, respectivement de refroidissement.

8. Dispositif selon une des revendications 6 ou 7, dans lequel le dispositif de chauffage, respectivement de refroidissement comporte au moins un élément Peltier (1) fonctionnant à puissance constante.

9. Dispositif selon une des revendications 6 à 8 présentant une surface extérieure (18) pouvant être alignée avec la surface (19) de manière à ce que le film de liquide recouvre uniformément la surface (19) et la surface extérieure (18) du dispositif, une dépression étant agencée dans cette surface extérieure (18) dans la région du dispositif de chauffage, respectivement de refroidissement.

10. Application du procédé selon la revendication 1, respectivement utilisation d'un dispositif selon la revendication 6 dans une installation destinée à délivrer un signal annonçant le point de solidification d'un liquide sur la surface.

FIG. 1

FIG. 2

FIG. 3

FIG. 4

FIG. 5

FIG. 6